# EUROPÄISCHE PATENTANMELDUNG

(11) **EP 2 058 096 A2**
(43) Veröffentlichungstag der Anmeldung: **13.05.2009**
(21) Anmeldenummer: 08018980.6
(22) Anmeldetag: 30.10.2008
(51) Int. Cl.: B27L 11/00

(54) **Hackmaschine**

(30) Priorität: 09.11.2007 DE 202007015651 U
(71) Anmelder: KOMPTECH GmbH, 8130 Frohnleiten (AT)
(72) Erfinder: Schildmeier, Horst, 32469 Petershagen (DE)
(74) Vertreter: Laufhütte, Dieter

(57) **Zusammenfassung**

Die Erfindung betrifft eine Hackmaschine (10) mit einer Einzugseinheit (14), einer Zerkleinerungseinheit (13) und einem Materialtransportsystem (16), wobei erfindungsgemäß in der Einzugseinheit ein Einzugsbereich durch horizontal und vertikal zur Bodenebene der Hackmaschine ausgerichtete angetriebene Einzugswalzen (30,32,34) gebildet ist.

## Beschreibung

Die Erfindung betrifft eine Hackmaschine, insbesondere zum Hacken von Stammholz und/oder Grünschnitt, mit einer Einzugseinheit, einer Zerkleinerungseinheit und einem Materialtransportsystem.

Derartige Hackmaschinen sind bereits aus der DE 198 18 165 C1 bekannt. Das wesentliche Element einer derartigen Hackmaschine wird durch die Zerkleinerungseinheit gebildet. Hier ist ein Hackrotor vorgesehen, der sogenannte Hackmesser auf seinem Umfang trägt sowie ein mit den Hackmessern zusammenwirkendes stationäres Gegenschneidenwerkzeug, welches an dem den Hackrotor umgebenden Gehäuse der Hackmaschine fest angeordnet ist. Dem Hackrotor vorgelagert ist eine Einzugseinheit, über welche das Hackmaterial, also beispielsweise das Stammholz oder aber auch der Grünschnitt zugeführt wird. Die Einzugseinheit weist in der Regel eine Anzahl von Einzugswalzen auf, die regelmäßig in einer oberen und einer unteren Reihe angeordnet sind. Diese Einzugswalzen fördern das Stammholz bzw. den Grünschnitt der Messereinheit bestehend aus den am Hackrotor angeordneten Hackmessern und den Gegenschneidenwerkzeugen zu. Dabei wird insbesondere das Stammholz längs ausgerichtet um in Richtung seiner Längsachse dem Hackrotor zugeführt.

Die in den bekannten Einzugseinheiten enthaltenen Einzugswalzen sind horizontal ausgerichtet, das heißt ihre Drehachsen sind parallel zum Rotor ausgerichtet. Eine seitliche Führung erfährt das eingezogene Hackgut üblicherweise durch trichterförmig zulaufende seitliche Wände. Diese Wände sind derart schräg angesetzt, dass das Material seitlich zusammengeführt und dem Hackrotor zugeführt werden kann. Dabei ergibt sich je nach Ausrichtung des Hackgutes ein starker Einzugswiderstand wodurch ein optimaler Arbeitsablauf erschwert wird. Dadurch, dass nur die oberen und unteren Einzugswalzen das zu hackende Gut einziehen, ergibt sich ein entsprechender Widerstand an den Seitenwänden, insbesondere durch querliegende oder abstehende Äste. Dieses Problem ergibt sich ganz besonders bei der Aufgabe von Strauchwerk oder Astwerk als zu hackendem Gut.

Aufgabe der vorliegenden Erfindung ist es daher, eine gattungsgemäße Hackmaschine derart weiterzubilden, dass das zugeführte Gut insbesondere auch dann leichter eingezogen werden kann, wenn es sperrig ist, wie beispielsweise Astgut oder Strauchgut.

Erfindungsgemäß wird diese Aufgabe ausgehend von einer Hackmaschine mit den Merkmalen des Oberbegriffs des Anspruchs 1 durch die Kombination mit den Merkmalen des kennzeichnenden Teils des Anspruchs 1 gelöst.

Demnach ist eine Hackmaschine, insbesondere zum Hacken von Stammholz und/oder Grünschnitt vorgesehen, die eine Einzugseinheit, eine Zerkleinerungseinheit und ein Materialtransportsystem aufweist und bei der erfindungsgemäß in der Einzugseinheit ein Einzugsbereich durch horizontal und vertikal zur Bodenebene der Hackmaschine ausgerichtete angetriebene Einzugswalzen gebildet ist. Durch diese Anordnung wird speziell bei Aufgabe von Strauchgut oder Astwerk das eingezogene Material nicht nur vertikal, sondern auch horizontal zusammengezogen, um die Zuführung zur Zerkleinerungseinheit, also zum Hackrotor zu erleichtern.

Durch die zusätzlichen vertikalen Einzugswalzen wird das gesamte Material entlang des rechteckigen Einzugskanals aktiv bewegt und dadurch sicherer eingeführt.

Besondere Vorteile der Erfindung ergeben sich aus den sich an den Hauptanspruch anschließenden Unteransprüchen.

Demnach können auf drei Seiten des Einzugsbereichs die Einzugswalzen fest und nur um ihre Rotationsachse drehbar angeordnet sein. Demgegenüber kann eine Einzugswalze einerseits um ihre Rotationsachse drehbar und zusätzlich schwenkbar gelagert sein. Die schwenkbar gelagerte Einzugswalze stellt ein Erfassen des eingezogenen Gutes sicher, da durch entsprechendes Verschwenken der Einzugswalze sichergestellt wird, dass die Walze am zu transportierenden Gut anliegt.

Besonders vorteilhaft sind die zusätzlich schwenkbaren Einzugswalzen im Bezug zur Bodenebene der Hackmaschine horizontal und bezüglich der anderen Einzugswalzen oben angeordnet. Hierdurch kann diese verschwenkbare Einzugswalze dann immer aufgrund ihres Eigengewichts soweit verschwenkt werden, bis sie auf dem einzuziehenden Gut aufliegt bzw. an den Anschlagpunkt der Schwenkbewegung gelangt.

Sämtliche Einzugswalzen können stufenlos mit synchroner Umfangsgeschwindigkeit vor- oder rückwärts angetrieben werden.

Besonders vorteilhaft kann der schwenkbaren Einzugswalze mindestens noch eine zusätzliche schwenkbare Einzugswalze zugeordnet sein.

Die mindestens eine zusätzliche Einzugswalze kann am selben Schwenkrahmen angeordnet sein wie die erste schwenkbare Einzugswalze.

Weitere Merkmale, Einzelheiten und Vorteile der Erfindung werden anhand eines in der beigefügten Zeichnung dargestellten Ausführungsbeispiels erläutert. Es zeigen:
- Figur 1:: eine perspektivische Ansicht einer erfindungsgemäßen Hackmaschine,
- Figur 2:: eine Detailansicht einer Einzugseinheit der Hackmaschine gemäß Figur 1 in einer ersten Arbeitsposition und
- Figur 3:: die Einzugseinheit gemäß Figur 2 in einer anderen Arbeitsposition.

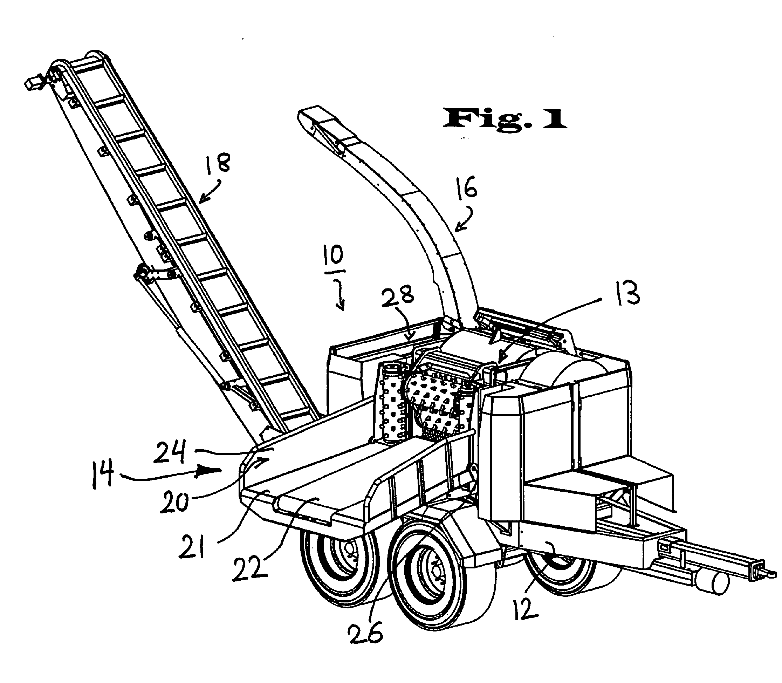

Die in der Figur 1 dargestellte Hackmaschine 10 ist auf einem Anhängerchassis 12 aufgebaut, das in hier nicht näher dargestellter Art und Weise an einen Schlepper anhängbar ist. Es weist eine Einzugseinheit 14 und ein Materialtransportsystem 16 bzw.18 auf. Zwischen der Einzugseinheit 14 und dem Materialtransportsystem 16 ist eine Zerkleinerungseinheit 13 angeordnet, die im wesentlichen aus einem Hackrotor besteht, der auf Umfang gleichverteilte Messerreihen aufweist, die mit gehäuseseitigen Gegenschneiden zusammenwirken. Der Aufbau der Zerkleinerungseinheit ist als solches bekannt und wird daher an dieser Stelle nicht weiter ausgeführt.

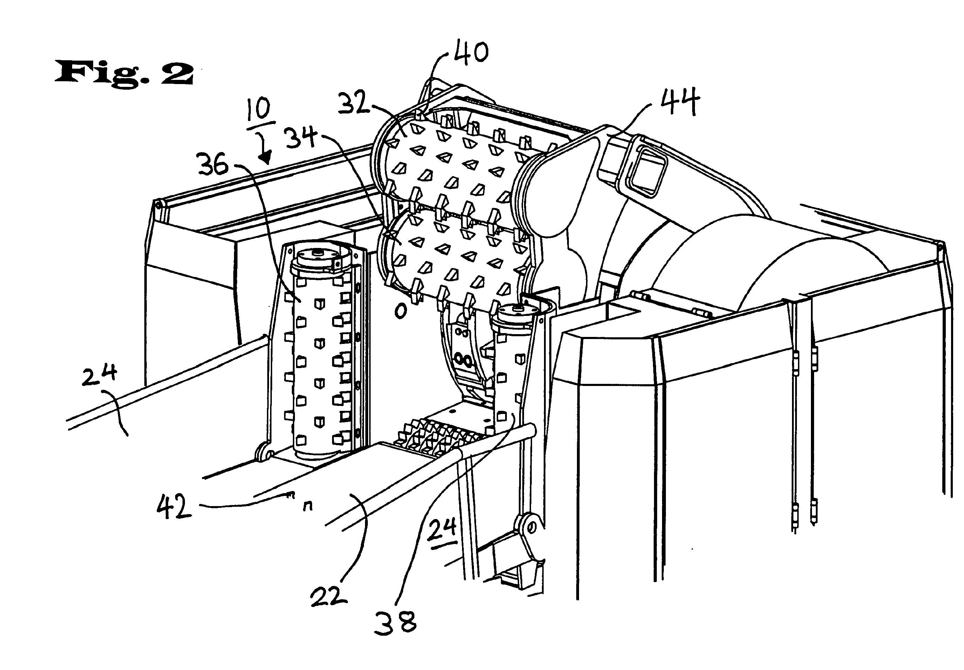

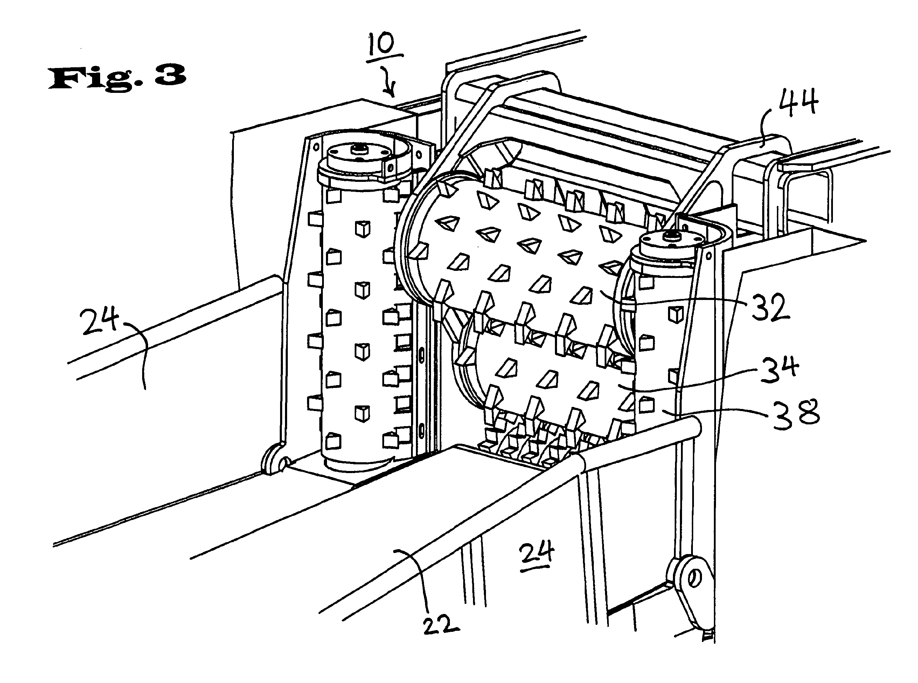

Wie in der Figur 1 dargestellt, besteht die Einzugseinheit 14 aus einem Zuführbereich 20, der einen Boden 21 und Seitenwände 24 aufweist. Im Boden 21 ist zentral ein Förderband 22 ausgebildet. Die gesamte Einheit 20 ist um ein Schwenklager 26 in eine Transportstellung hochklappbar. Die Einzugseinheit 14 weist zur Definition eines Einzugsbereichs 28 horizontale und vertikale Einzugswalzen auf. Diesbezüglich kann auf die Figuren 2 und 3 verwiesen werden. Die horizontalen Einzugswalzen 30 sowie 32 und 34 verlaufen horizontal zur Bodenebene der Hackmaschine 10, die ja parallel zur Chasissauflageebene des Anhängerchassis 12 verläuft. Damit verlaufen die Einzugswalzen 30, 32 und 34 parallel zur Achse des Hackrotors der Zerkleinerungseinheit 13. Seitlich im Anschluß an die Seitenwände 24 sind vertikal ausgerichtete Einzugswalzen 36 und 38 angeordnet.

Sämtliche Einzugswalzen weisen auf Umfang verteilt Zähne 40 auf, die ein Eingreifen der Einzugswalzen in das zu transportierende Gut (hier nicht dargestellt) ermöglichen. Zur Verbesserung des Eingriffs in das zu transportierende Material dienen auch die auf dem Transportband 22 ausgebildeten Vorsprünge 42.

Die Einzugswalzen 30, 36 und 38 sind jeweils fest und nur um ihre Rotationsachse drehbar angeordnet. Demgegenüber sind die Einzugswalzen 32 und 34 einmal um ihre Rotationsachse selbst drehbar, aber zusätzlich auch mittels eines Schwenkrahmens 44 schwenkbar ausgeführt. Die Schwenkstellungen ergeben sich aus dem Vergleich der Figuren 2 und 3. In Figur 2 sind die Einzugswalzen 32 und 34 in einer hochgeschwenkten Position dargestellt, während sie in der Figur 3 in einer abgeschwenkten Position dargestellt sind.

Sämtliche Einzugswalzen 30, 32, 34, 36 und 38 werden stufenlos mit synchroner Umfangsgeschwindigkeit in Vorwärts- bzw. Rückwärtsrichtung angetrieben. Als Antrieb kann beispielsweise ein hier nicht näher dargestellter Motor eines Schleppers dienen.

Mit der hier ausgeführten Einzugseinheit kann die Hackmaschine nicht nur Stammholz mit hoher Geschwindigkeit in die zwischen den Einzugswalzen gebildeten großen Einlassöffnung einziehen. Vielmehr kann auch sperriges Strauchwerk aggressiv eingezogen werden. Die Anordnung der horizontalen und vertikalen Einzugswalzen sorgt für eine Vorkompression und eine aktive Weiterleitung in den Zerkleinerungsbereich. Durch die optimierte Geometrie der horizontalen Einzugswalzen 30 sowie 32 und 34 findet nahezu permanent eine definierte Übergabe an den Hackrotor der Zerkleinerungseinheit 13 statt. Ein Querdrehen der Reststücke und damit ein Hacken quer zur Faser wird weitgehend unterbunden.

## Patentansprüche

1. Hackmaschine, insbesondere zum Hacken von Stammholz und / oder Grünschnitt, mit einer Einzugseinheit, einer Zerkleinerungseinheit und einem Materialtransportsystem,
**dadurch gekennzeichnet,**
**dass** in der Einzugseinheit ein Einzugsbereich durch horizontal und vertikal zur Bodenebene der Hackmaschine ausgerichtete angetriebene Einzugswalzen gebildet ist.

2. Hackmaschine nach Anspruch 1, **dadurch gekennzeichnet, dass** auf drei Seiten des Einzugsbereichs die Einzugswalzen fest und nur um ihre Rotationsachse drehbar und dass eine Einzugswalze um ihre Rotationsachse drehbar und zusätzlich schwenkbar gelagert sind.

3. Hackmaschine nach Anspruch 2, **dadurch gekennzeichnet, dass** die zusätzlich schwenkbare Einzugswalze im Bezug zur Bodenebene der Hackmaschine horizontal und bezüglich der anderen Einzugswalzen oben angeordnet ist.

4. Hackmaschine nach Anspruch 3, **dadurch gekennzeichnet, dass** sämtliche Einzugswalzen stufenlos mit synchroner Umfangsgeschwindigkeit vor- oder rückwärts angetrieben werden.

5. Hackmaschine nach einem der Ansprüche 2 bis 4, **dadurch gekennzeichnet, dass** der schwenkbaren Einzugswalze mindestens noch eine zusätzliche schwenkbare Einzugswalze zugeordnet ist.

6. Hackmaschine nach Anspruch 5, **dadurch gekennzeichnet, dass** die mindestens eine zusätzliche Einzugswalze am selben Schwenkrahmen angeordnet ist wie die erste schwenkbare Einzugswalze.
